# EUROPÄISCHE PATENTSCHRIFT

(11) **EP 0 558 020 B1**
(45) Veröffentlichungstag und Bekanntmachung des Hinweises auf die Patenterteilung: **12.06.1996**
(21) Anmeldenummer: 93103032.4
(22) Anmeldetag: 26.02.1993
(51) Int. Cl.: B29C 47/90

(54) **Wanddickenmessvorrichtung mit Kalibriervorrichtung**
Wall thickness gauge with sizing tool
Dispositif pour mesurer l'épaisseur de la paroi avec dispositif de calibrage

(30) Priorität: 27.02.1992 DE 4205955; 03.07.1992 DE 4221920
(43) Veröffentlichungstag der Anmeldung: 01.09.1993
(73) Patentinhaber: FRIEDRICH THEYSOHN GmbH, D-32547 Bad Oeynhausen (DE)
(72) Erfinder: Krüger, Ernst, Dr., W-4504 Georgsmarienhütte (DE); Herbach, Wilhelm, W-4970 Bad Oeynhausen (DE)
(74) Vertreter: Cohausz & Florack Patentanwälte

(56) Entgegenhaltungen:
- DE-A- 4 033 443
- US-A- 4 152 380
- US-A- 4 740 146

## Beschreibung

Die Erfindung betrifft eine Extrudieranlage für Langprodukte, insbesondere Kunststoffrohre, gemäß dem Oberbegriff des Anspruchs 1.

Eine solche Extrudieranlage ist aus der US-A-4 152 380 bekannt.

Zur Messung der Wanddicke des mittels der Extrudieranlage hergestellten Langproduktes, insbesondere der Wanddicke des Kunststoffrohres, sind Ultraschall-Wanddickenmeßgeräte gebräuchlich, die auf der Laufzeitmessung des in das Produkt eingeleiteten Ultraschallsignals basieren. Dabei hängt die Laufzeit des Ultraschallsignals von den Materialeigenschaften und der Temperatur des extrudierten Produktes ab. Um eine möglichst genaue Aussage über die Wanddicke entlang des Umfanges des Langproduktes zu erhalten, ist es erforderlich, daß die Temperatur des extrudierten Produktes an den Meßpositionen der üblicherweise gleichmäßig über den gesamten Umfang verteilt angeordneten Ultraschallsensoren konstant ist.

Aus der DE 39 06 363 C1 ist eine Extrudieranlage bekannt, bei der die Wanddickenmeßvorrichtung zwischen dem Extruder und einer Kühleinrichtung angeordnet ist, wobei hierbei umlaufende Sensoren vorgesehen sind, die um eine ortsfeste, wassergekühlte und mit Unterdruck beaufschlagte Kalibrierhülse rotieren. Mit einer solchen Vorrichtung läßt sich zwar die Temperaturverteilung über den Umfang vereinheitlichen, doch kann es auch hier noch zu nicht tolerierbaren Temperaturinhomogenitäten kommen. Darüber hinaus ist die bekannte Vorrichtung vergleichsweise kompliziert sowohl im Aufbau als auch in der Handhabung, da beim Übergang von einem Extrudierdurchmesser auf einen anderen umfangreiche Umrüstarbeiten erforderlich sind.

Bei der aus der US-A-4 152 380 bekannten Extrudieranlage hat die Vorsatzhülse den gleichen Innendurchmesser wie die Kalibrierhülse. Sie ist mit der Kalibrierhülse entweder einstückig ausgebildet oder geht unmittelbar in sie über. Sie besteht aus Metall und dient dazu, bei der Messung mit dem Ultraschallsignal ein Referenzsignal zur Kalibrierung der Meßvorrichtung zu liefern. Damit sie diese Aufgabe erfüllen kann, muß ihre Wanddicke sehr genau bemessen sein. Damit ist ein erheblicher maschinentechnischer Aufwand verbunden. Das macht sich besonders bei einer Umrüstung auf andere Formate bemerkbar.

Der Erfindung liegt die Aufgabe zugrunde, eine Extrudieranlage der eingangs genannten Art dahingehend weiterzuentwickeln, daß sie einerseits bei hoher Meßgenauigkeit robust im Aufbau ist und der maschinentechnische Aufwand zur Umrüstung auf andere Formate gering ist.

Diese Aufgabe wird erfindungsgemäß dadurch gelöst, daß die Vorsatzhülse und eine ihr zugeordnete Haltevorrichtung eine geschlossene Kammer bilden, innerhalb der ein unter Unterdruck stehender Innenraum vorgesehen ist, in dem der mindestens eine Ultraschallsensor mit einem Kühlmittel, insbesondere Wasser, umspülbar ist.

Die geschlossene Kammer ermöglicht eine intensive Kühlung im Bereich zwischen dem Meßkopf des Ultraschallsensors und der Außenfläche des Langproduktes, wodurch gewährleistet wird, daß speziell im Einlaufbereich der Kalibrierhülse kein Verkleben der heißen Masse des Langproduktes stattfinden kann. Die Kammer kapselt den Ultraschallsensor ein, so daß auch unter rauhen Betriebsbedingungen eine gute Funktionalität gewährleistet ist.

Durch die örtliche Nähe zwischen Austritt des extrudierten Produktes aus der Düse des Extruders und der Position des Ultraschallsensors hat das extrudierte Langprodukt über seinen gesamten Umfang noch denselben Temperaturwert wie beim Austritt aus der Extruderdüse, weil bis zur Position der Ultraschallsensoren nur eine unwesentliche Kühlung durch die Umgebungsluft stattgefunden hat. Neben dem Vorteil der Temperaturvergleichmäßigung hat die frühzeitige Wanddickenmessung den weiteren Vorteil, daß die Produktqualität durch die extrem kurze Totzeit des Wanddickenregelprozesses erheblich verbessert werden kann. Mit der Wanddickenmessung wird bereits eine Kalibrierung des Langproduktes kombiniert, da die Vorsatzhülse als in Richtung des Extruders verlängerte Kalibrierhülse wirkt. Durch die Lösbarkeit der Vorsatzhülse wird ermöglicht, daß diese gemeinsam mit der Kalibrierhülse ausgetauscht werden kann, wenn eine Umstellung der Produktion auf einen anderen Durchmesser des Langproduktes erfolgen soll, ohne daß die Sensorik der Wanddickenmeßvorrichtung ausgewechselt werden muß. Der vorgegebene Abstand zwischen Meßkopf und Außenfläche kann beliebig zwischen dem Wert 0, wobei der Meßkopf direkt auf der Außenfläche angeordnet ist, und einem anderen gewünschten Vorgabewert variiert werden, so daß sich auch hierdurch eine leichte Anpassung an unterschiedliche Produktdurchmesser ergibt. In einer vorteilhaften Ausgestaltung der Erfindung wird durch die ortsfeste Anordnung des mindestens einen Ultraschallsensors eine störunanfällige und mechanisch vereinfachte Wanddickenmeßvorrichtung geschaffen.

Im Unterschied zu dieser Ausgestaltung zeichnet sich eine andere Variante dadurch aus, daß der mindestens eine Ultraschallsensor nicht ortsfest sondern drehbeweglich gegenüber dem Umfang des Langproduktes angeordnet ist. Dies bietet die zusätzliche Möglichkeit einer rotierenden oder auch reversierenden Bewegung des oder der Sensoren in Bezug auf Oberfläche des Langproduktes. Falls mehrere umfänglich versetzt angeordnete Ultraschallsensoren vorgesehen sind, müssen diese nur um einen der jeweiligen Winkelteilung entsprechenden Winkel verdreht werden, um den gesamten Umfang abzudecken.

Wenn gemäß einer weiteren Ausgestaltung der Erfindung vorgesehen ist, daß die Mantelfläche der Vorsatzhülse Öffnungen aufweist, durch die der Innenraum mit dem Außenumfang des Langproduktes in Verbindung steht, wird hierdurch die Kalibrierfunktion der Anlage unterstützt, da der Außenmantel des Langproduktes gegen die Hülse gezogen wird. Durch die Öffnungen in der Mantelfläche kann nicht nur ein innerhalb der geschlossenen Kammer herrschender Unterdruck weitergeleitet werden, sondern auch Kühlmittel durchtreten, so daß die Effektivität der Kühlung weiter verbessert wird.

Wenn der Innenraum über radiale Bohrungen mit einem weiteren Innenraum derart in Verbindung steht, daß durch die Bohrungen Kühlmittel aus einer Quelle in den den Meßkopf des Ultraschallsensors umgebenden Innenraum förderbar ist, läßt sich die Kühlung des Langproduktes weiter verbessern, da durch die Querschnittsverengung und das nachfolgende Austreten des Kühlmittels in den den Meßkopf umgebenden inneren Raum eine Verwirbelung stattfindet.

Hierzu können noch zusätzlich sogenannte Wirbelkammern vorgesehen sein. Die Verwirbelung des Kühlmittels hat darüber hinaus den Vorteil, daß der Meßkopf von Verunreinigungen oder Luftblasen befreit wird, die zu einer Verfälschung des Meßergebnisses führen würden.

Vorteilhaft ist weiterhin vorgesehen, daß der Einlaufbereich der Vorsatzhülse mit einer zusätzlichen Kühlung versehen ist. Hierdurch läßt sich nämlich die Abkühlrate beim Auftreffen des Langproduktes auf die Vorsatzkammer weiter erhöhen. Dies ist bei bestimmten Werkstoffen, beispielsweise bei der Extrusion von Polyolefinen vorteilhaft.

Wenn gemäß einer weiteren Ausgestaltung der Erfindung mindestens zwei am Außenumfang des Langproduktes versetzt angeordnete Ultraschallsensoren vorgesehen sind, aus deren Ausgangssignaldifferenz ein Regelsignal für die Einstellung der Wanddicke des Langproduktes ableitbar ist, läßt sich die Genauigkeit der Wanddickenmeßvorrichtung vorteilhaft in einem Regelkreis anwenden. In Abhängigkeit von der von den Sensoren gemessenen Signaldifferenz wird als Stellgröße das oder die Halsbänder der Extrusionsdüse verstellt, so daß auf eine inhomogene Umfangsverteilung eingewirkt werden kann. Der hierdurch ausgebildete Regelkreis kann nahezu totzeitfrei auf ein Differenzsignal der Sensoren reagieren.

Eine kostengünstige Realisierung läßt sich erreichen, wenn die Unterdruckbeaufschlagung der Öffnungen der Vorsatzkammer über die Vakuumversorgung aus der Kalibriereinrichtung erfolgt. Die bereits installierten Mittel für die Vakuumversorgung der Kalibriereinrichtung können hierdurch ausgenutzt werden.

Die Erfindung wird im folgenden anhand einer ein Ausführungsbeispiel darstellenden Zeichnung näher erläutert. Im einzelnen zeigen:
- Fig 1: eine Extrusionsanlage im Axialschnitt und
- Fig.2: einen Ausschnitt der in Fig.1 dargestellten Vorrichtung im Bereich der Wanddickenmeßvorrichtung.

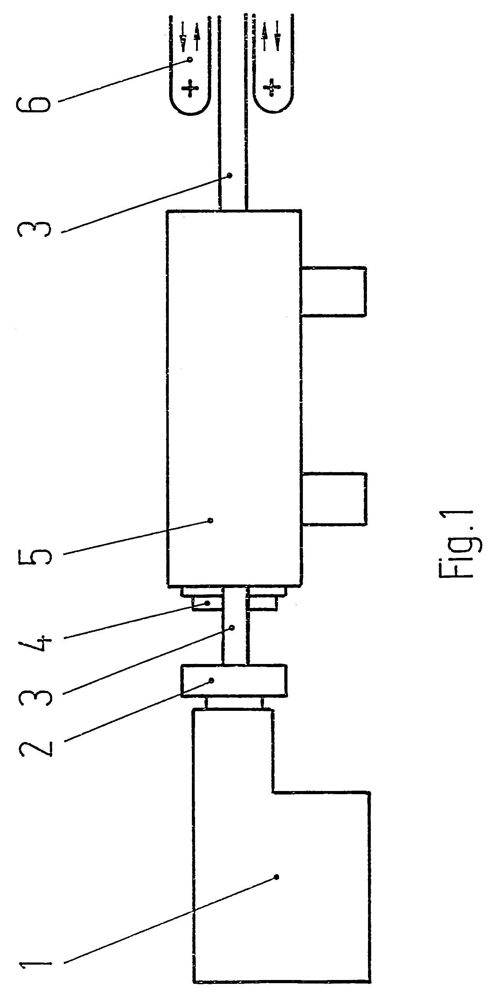

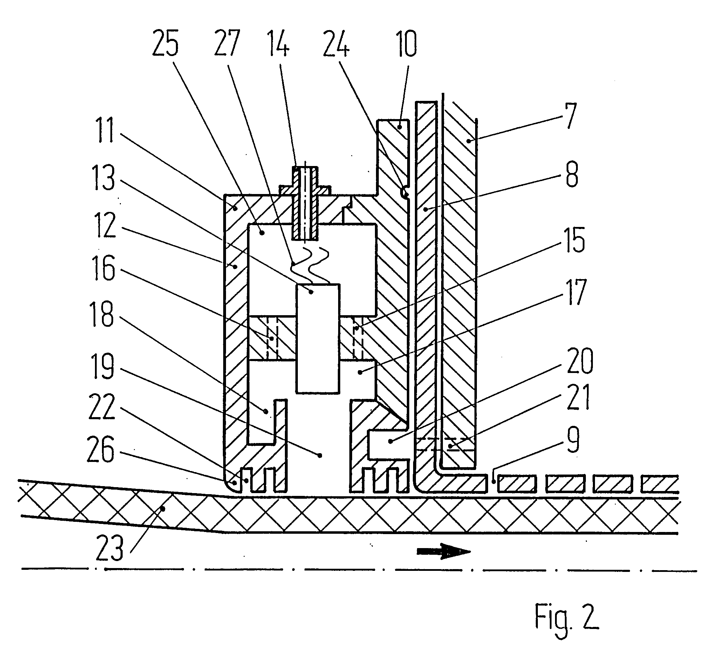

Wie aus Fig. 1 hervorgeht, durchläuft das extrudierte Langprodukt, welches insbesondere ein Kunststoffrohr 3 sein kann, nach dem Austritt der heißen Kunststoffmasse aus den Düsen 2 des Extruders 3 zunächst den Bereich einer Vorsatzkammer 4, die einer Kalibriereinrichtung 5 vorgeordnet ist, welche eine wassergekühlte und unterdruck- beaufschlagte Kalibrierhülse aufweist. Nach dem Austritt aus der Kalibriereinrichtung 5 durchläuft das Rohr 3 den Bereich eines Raupenabzuges 6. Wie in Fig.2 dargestellt ist, besteht die Kalibriereinrichtung 5 im wesentlichen aus einer Kalibrierhülse 8, die an der dem extrudierten Rohr 23 zugeordneten Fläche Öffnungen 9 aufweist, durch die Unterdruck auf die Rohrmantelfläche einwirken kann. Die Kalibrierhülse 8 ist an einer Vorderwand 7 der Kalibriereinrichtung lösbar befestigt. Der Kalibriereinrichtung 5 vorgeordnet ist die Vorsatzkammer 4, die aus den in Fig.2 dargestellten Elementen 10,11 und 12 besteht.

Die Pfeilrichtung unterhalb von Fig.2 kennzeichnet die Laufrichtung des extrudierten Langproduktes.

Die Vorsatzkammer besteht aus einer Rückwand 10, die über eine umlaufende Nut 24 gegen die Kalibrierhülse 8, an der die Rückwand 10 befestigt ist, abgedichtet ist. Die Rückwand 10 dient als Halteeinrichtung für einen Ultraschallsensor 13. Dazu verfügt die Rückwand 10 über Rippenbereiche, innerhalb der der zylindrisch ausgebildete Ultraschallsensor 13 radial derart verschiebbar ist, daß der Abstand zwischen Meßkopf und Außenfläche der Rohrwandung 23 innerhalb eines inneren Raumes 19 einstellbar ist.

Die einlaufseitige Begrenzung der Vorsatzkammer bildet einen Deckel 11, welcher gemeinsam mit einer Vorsatzhülse 12 lösbar an der Rückwand 10 befestigt ist. Die Vorsatzhülse 12 weist an der dem Langprodukt zugewandten Fläche Schlitze 22 auf, durch die das extrudierte Langprodukt mit seiner Außenfläche mit dem im inneren der Vorsatzkammer gebildeten Innenraum drucktechnisch in Verbindung steht.

Über einen Vakuumverteilring 20 und eine Vakuumbohrung 21 steht der Innenraum der Vorsatzkammer mit dem Innenvolumen der Kalibriereinrichtung 5 in Verbindung, so daß eine gemeinsame Evakuierung der Volumina erfolgen kann.

Der Einlaufbereich 26 der Vorsatzkammer ist mit einer zusätzlichen Kühlung versehen.

Innerhalb der den Ultraschallsensor 13 tragenden Rippen sind radial verlaufende Kanäle 15,16 angeordnet, durch die das Kühlmittel, insbesondere Wasser, von einer oberen Kammer 25 in den Innenraum 19 gelangen kann. Der Anschluß der Radialbohrungen 15,16 in den Innenraum erfolgt über Wirbelkammern 17, 18, in denen das mit Druck durch die Radialbohrungen 15,16 hindurchgeleitete Kühlmittel verwirbelt wird.

An der Oberseite der Vorsatzkammer befindet sich ein Anschluß zur Zuführung des Kühlmittels, welcher auch zur Durchführung der elektrischen Anschlüsse des Ultraschallsensors 13, die allgemein mit dem Bezugszeichen 27 dargestellt sind, dient.

Die Funktion der erfindungsgemäßen Extrudieranlage ist wie folgt:
Mittels der erfindungsgemäßen Extrudieranlage werden Kunststoffrohre 3 produziert, die unmittelbar nach Austreten aus der Düse 2 des Extruders 1 noch etwa die Temperatur der Massetemperatur des Extruders aufweist. Die Vermessung der Wanddicke des austretenden Rohres 3 erfolgt im Bereich unmittelbar nach der Düse über über den Umfang des Rohres 3 versetzt angeordnete Ultraschallsensoren 13. Die Integration des Sensors in die Kalibriervorkammer gewährleistet, daß das zu messende Langprodukt über seine gesamte Breite bzw. seinen gesamten Umfang die gleiche Massetemperatur hat, weil bis zu dieser Stelle des Langpropduktes nur unwesentlich über eine sehr kurze Distanz zwischen dem Austritt aus der Düse und der Meßposition Umgebungsluft kühlend auf das Rohr eingewirkt hat. Durch die Unterdruckbeaufschlagung des Rohres an der Vorsatzkammer erfolgt eine Vorkalibrierung des Rohres, noch bevor es in die eigentliche Kalibriervorrichtung 5 eintritt. Die intensive Kühlung durch den durch die Öffnungen 22 vermittelten Wärmeaustausch mit der gekühlten Vorsatzkammer gewährleistet, daß speziell im Einlaufbereich 26 der Vorsatzkammer kein Verkleben des heißen Rohres stattfindet.

Die beschriebene Extrudieranlage läßt sich sehr einfach auf unterschiedliche zu extrudierende Rohrdurchmesser umrüsten, da hierzu lediglich die Kalibrierhülse 8 und die Vorsatzhülse 12 ausgetauscht werden müssen, während der Ultraschallsensor 13 ortsfest an der tragenden Rückwand 10 der Vorsatzkammer verbleibt. Falls erforderlich, kann der Ultraschallsensor 13 in radialer Richtung auf den Rohrmantel hin oder von diesem weg bewegt werden, um den optimalen Abstand zwischen Meßkopf und Rohrmantel zu erreichen. Der innere Raum 19 kann dabei ganz oder vollständig mit Kühlmittel, insbesondere Wasser gefüllt sein, um eine optimale Ankopplung an das zu vermessende Produkt zu erreichen. Durch die Verwirbelung des Kühlmittels in den Verwirbelungskammern 18,19, in die das Kühlmittel nach Durchgang durch die Radialbohrungen 15,16 eintritt, wird der Meßkopf des Sensors 13 freigespült und gleichzeitig der Kontakt über die innere Öffnung 19 mit dem Rohraußendurchmesser 23 hergestellt. Dabei wird Kühlmittel über die Öffnungen 22 abgesaugt.

Hierdurch ist gewährleistet, daß das Rohr 23 intensiv gekühlt wird und durch Anlage des Unterdrucks an die umlaufenden Öffnungen 22 vorkalibriert wird und im Bereich der Ultraschallsensoren 13 eine am gesamten Umfang gleiche Temperatur des Rohres 23 vorhanden ist.

Durch die sehr kurze Bauform der Vorsatzkammer 4 ist einerseits eine einfache Montage möglich. Andererseits ist durch die vollkommene Abkapselung des Ultraschallsensors 13 eine Messung auch unter rauhesten Betriebsbedingungen möglich.

### BEZUGSZEICHENLISTE

- 1: Extruder
- 2: Düse
- 3: Langprodukt
- 4: Vorsatzkammer
- 5: Kalibriereinrichtung
- 6: Raupenabzug
- 7: Vorderwand von Kalibriereinrichtung
- 8: Kalibrierhülse
- 9: Vakuumschlitze
- 10: Rückwand von Vorsatzkammer
- 11: Deckel der Vorsatzkammer
- 12: Vorsatzhülse
- 13: Ultraschallsensor
- 14: Kühlmittelanschluß
- 15 + 16: radiale Bohrungen
- 17 + 18: Wirbelkammern
- 19: innerer Raum
- 20: Vakuumverteilring
- 21: Vakuumbohrung
- 22: Vakuumschlitze
- 23: Rohrwandung
- 24: umlaufende Nut
- 25: weiterer innerer Raum
- 26: Einlaufbereich für Vorsatzkammer
- 27: elektrische Anschlüsse des Sensors

## Patentansprüche

1. Extrudieranlage für Langprodukte, insbesondere Kunststoffrohre, mit einem Extruder (1), einer diesem nachgeordneten, wassergekühlten und mit Unterdruck beaufschlagbaren Kalibrierhülse (8) und einer der Kalibrierhülse (8) unmittelbar vorgeordneten Wanddickenmeßvorrichtung, die mindestens einen Ultraschallsensor (13) mit vorgebbarem Abstand seines Meßkopfes von der Außenseite des Langproduktes (23) und eine mit der Kalibrierhülse (8) fluchtende Vorsatzhülse (12) aufweist, deren Innendurchmesser auf den einlaufseitigen Innendurchmesser der Kalibrierhülse (8) abgestimmt ist, und die an einer ihr zugeordneten Haltevorrichtung lösbar befestigt ist, **dadurch gekennzeichnet,** daß die Vorsatzhülse (8) und die Haltevorrichtung (10) eine geschlossene Kammer bilden, innerhalb der ein unter Unterdruck stehender Innenraum (19) vorgesehen ist, in dem der mindestens eine Ultraschallsensor (13) mit einem Kühlmittel, insbesondere Wasser, umspülbar ist.

2. Extrudieranlage nach Anspruch 1, **dadurch gekennzeichnet,** daß der Ultraschallsensor (13) ortsfest angeordnet ist.

3. Extrudieranlage nach Anspruch 1, **dadurch gekennzeichnet,** daß der Ultraschallsensor (13) um das Langprodukt (23) umlaufend gelagert ist.

4. Extrudieranlage nach einem der Ansprüche 1 bis 3, **dadurch gekennzeichnet,** daß die Mantelfläche der Vorsatzhülse (12) Öffnungen (22) aufweist, durch die der Innenraum (19) mit dem Außenumfang des Langproduktes (23) in Verbindung steht.

5. Extrudieranlage nach einem der vorhergehenden Ansprüche, **dadurch gekennzeichnet,** daß der Innenraum (19) über radiale Bohrungen (15, 16) mit einem weiteren Innenraum (25) derart in Verbindung steht, daß durch die Bohrungen (15, 16) Kühlmittel aus einer Quelle in den den Meßkopf des Ultraschallsensors (13) umgebenden Innenraum (19) förderbar ist.

6. Extrudieranlage nach einem der vorhergehenden Ansprüche, **dadurch gekennzeichnet,** daß der Einlaufbereich (26) der Vorsatzhülse mit einer zusätzlichen Kühlung versehen ist.

7. Extrudieranlage nach einem der vorhergehenden Ansprüche, **dadurch gekennzeichnet,** daß mindestens zwei am Außenumfang des Langproduktes (23) versetzt angeordnete Ultraschallsensoren vorgesehen sind, aus deren Ausgangssignaldifferenz ein Regelsignal für die Einstellung der Wanddicke des Langproduktes ableitbar ist.

8. Extrudieranlage nach einem der vorhergehenden Ansprüche, **dadurchgekennzeichnet,**daß die Unterdruckbeaufschlagung der Öffnungen (22) der Vorsatzhülse (12) über die Vakuumversorgung aus der Kalibriereinrichtung (5) erfolgt.

9. Extrudieranlage nach einem der vorhergehenden Ansprüche, **dadurch gekennzeichnet,** daß dem inneren Raum (19) mindestens eine, insbesondere zwei Verwirbelungskammern (17, 18) vorgeordnet sind, in denen das aus den radialen Bohrungen (15, 16) austretende Kühlmittel verwirbelt wird.

10. Extrudieranlage nach einem der vorhergehenden Ansprüche, **dadurch gekennzeichnet,** daß mehrere auf dem Umfang der Haltevorrichtung (10) versetzt angeordnete Ultraschallsensoren (13) vorgesehen sind.

## Claims

1. An extrusion installation for producing elongated products, more particularly plastic-tubes, comprising an extruder (1), a watercooled calibration sleeve (8) acted upon by negative pressure following said extruder (1), and a wall thickness measuring device preceding directly the calibration sleeve (8) having at least a single ultrasonic sensor (13) which is located at a predetermined distance between its measuring head and the outer surface of said elongated product (23) and an attachment sleeve (12) aligned with the calibrating sleeve (8) having an inner diameter which is matching with the inner diameter of the calibrating sleeve (8) at it's entrance, and releasably attached to an associated retaining device (10), characterized in that the attachment sleeve (12) and its retaining device (10) form a closed chamber, wherein an internal space subjected to negativ pressure is provided containing the said single ultrasonic sensor (13) which can be flushed with a coolant, more particularly water.

2. An extrusion installation according to claim 1, wherein said ultrasonic sensor (13) is kept fixed.

3. An extrusion installation according to claim 1, wherein said single ultrasonic sensor (13) is rotably mounted so as to rotate around said elongated product (23).

4. An extrusion installation according to one of the preceding claims, wherein the shell of the attachment sleeve (12) includes openings (22) via which said internal space (19) communicates with the outer periphery of said elongated product (23).

5. An extrusion installation according to one of the preceding claims, characterized in that the internal space (19) so communicates via radial bores (15, 16) with a further inner space (25) that coolant can be conveyed via the bores (15, 16) from a source to the inner space (19) enclosing the measuring head of the ultrasonic sensor (13).

6. An extrusion installation according to one of the preceding claims, characterized in that the inlet zone (26) of the attaching sleeve has an additional cooling.

7. An extrusion installation according to one of the preceding claims, characterized in that at least two ultrasonic sensors are provided which are disposed offset on the outer periphery of the elongate product (23) and from whose output signal difference a control signal can be derived for the adjustment of the wall thickness of the elongate product.

8. An extrusion installation according to one of the preceding claims, characterized in that the openings (22) of the attachment sleeve (12) are acted upon by negative pressure via the vacuum supply from the calibration device (5).

9. An extrusion installation according to one of the preceding claims, characterized in that the inner space (19) is preceded by at least one, more particularly two turbulence chambers (17, 18) in which the coolant emerging from the radial bores (15, 16) is eddied.

10. An extrusion installation according to one of the preceding claims, characterized in that several ultrasonic sensors (13) are disposed offset on the outer periphery of the retaining means (10).

## Revendications

1. Installation d'extrusion pour des produits allongés, notamment des tuyaux en matière plastique, comprenant une extrudeuse (1), un manchon (8) de calibrage auquel peut être appliqué un vide partiel, refroidi à l'eau et disposé en aval de l'extrudeuse, et un dispositif de mesure de l'épaisseur de parois disposé directement avant le manchon (8) de calibrage, ce dispositif présentant au moins un capteur (13) à ultrasons, la distance de sa tête de mesure par rapport à la face extérieure du produit (23) allongé pouvant être prédéfinie, et un manchon amont (12) en alignement avec le manchon (8) de calibrage, le diamètre intérieur du manchon amont étant réglé par rapport au diamètre intérieur du manchon (8) de calibrage du côté de son entrée, ce manchon amont étant fixé de manière amovible à un dispositif de maintien (10) qui lui est associé, caractérisée en ce que le manchon (12) amont et le dispositif de maintien (10) forment une chambre fermée à l'intérieur de laquelle une chambre intérieure (19) soumise à un vide partiel est prévue, dans laquelle au moins un capteur (13) à ultrasons peut être baigné dans un agent de refroidissement, notamment de l'eau.

2. Installation d'extrusion selon la revendication 1, caractérisée en ce que le capteur (13) à ultrasons est agencé fixe en position.

3. Installation d'extrusion selon la revendication 1, caractérisé en ce que le capteur (13) à ultrasons est monté de façon tournante autour du produit (23) allongé.

4. Installation d'extrusion selon l'une quelconque des revendications 1 à 3, caractérisée en ce que la surface de l'enveloppe du manchon (12) amont présente des ouvertures (22) par lesquelles la chambre intérieure (19) est en communication avec le pourtour extérieur du produit allongé (23).

5. Installation d'extrusion selon l'une des revendications précédentes, caractérisée en ce que la chambre intérieure (19) est en communication avec une autre chambre intérieure (25) par l'intermédiaire de perçages (15, 16) radiaux de telle sorte qu'à travers les perçages (15,16), un agent de refroidissement peut être amené à partir d'une source dans la chambre intérieure (19) entourant la tête de mesure du capteur (13) à ultrasons.

6. Installation d'extrusion selon l'une des revendications précédentes caractérisée en ce que la zone (26) d'entrée du manchon amont est pourvue d'un refroidissement supplémentaire.

7. Installation d'extrusion selon l'une des revendications précédentes caractérisée en ce qu'on prévoit au moins deux capteurs à ultrasons disposés de façon décalée sur le pourtour du produit (23) allongé, la différence de signal de sortie des capteurs permettant de déduire un signal de commande pour la régulation de l'épaisseur de paroi du produit allongé.

8. Installation d'extrusion selon l'une des revendications précédentes, caractérisée en ce que l'application d'un vide partiel aux ouvertures (22) du manchon (12) amont s'effectue par l'intermédiaire d'un dispositif de mises sous vide du dispositif (5) de calibrage.

9. Installation d'extrusion selon l'une des revendications précédentes, caractérisée en ce qu'au moins une, notamment deux chambres de tourbillonnement (17, 18), sont disposées en amont de la chambre (19) intérieure, dans lesquelles l'agent de refroidissement sortant des perçages (15, 16) radiaux est mis en tourbillonnement.

10. Installation d'extrusion selon l'une des revendications précédentes, caractérisée en ce que plusieurs capteurs (13) à ultrasons disposés de façon décalée sur le pourtour du dispositif de maintien (10) sont prévus.
